# EUROPEAN PATENT SPECIFICATION

(11) **EP 2 123 899 B1**
(45) Date of publication and mention of the grant of the patent: **26.10.2011**
(21) Application number: 08156784.4
(22) Date of filing: 23.05.2008
(51) Int. Cl.: F02M 61/08, F02M 61/16, F02M 51/06

(54) **Fuel injector with a solenoid actuator**
Kraftstoffinjektor mit Solenoid-Aktuator
Injecteur de carburant avec actionneur à solénoïde

(43) Date of publication of application: 25.11.2009
(73) Proprietor: Delphi Technologies, Inc., Troy, Michigan 48007 (US)
(72) Inventor: HOFFMANN, Guy, L-5240, Sandweiler (LU)
(74) Representative: Robert, Vincent

(56) References cited:
- EP-A- 1 783 356
- DE-A1- 19 927 900
- DE-A1- 19 946 602
- US-A1- 2002 063 173

## Description

### TECHNICAL FIELD

The present invention relates to a fuel injector and in particular to a fuel injector for direct injection of gasoline into the combustion chamber of an internal combustion engine.

### BACKGROUND OF THE INVENTION

Modem direct injection gasoline engines require fuel injectors to operate under extreme conditions of temperature and pressure and with high fuel pressures. Furthermore, the fuel injector must open and close very rapidly in order to provide multi-pulse injection cycles required for fuel efficiency and low emissions.

Current high pressure direct injection fuel injectors either use inwardly opening valves (nozzle type or multi-hole director) in conjunction with solenoid actuation or outwardly opening valves using piezo-electric actuation. The outwardly opening piezo-electric actuated injector has demonstrated the highest potential for reducing fuel consumption, but the cost of the piezo-stack and driver is prohibitive for high volume applications.

Known outwardly opening piezo-electric actuated fuel injectors generally comprise a valve body having a tip portion defining a spray aperture, a pintle or valve stem extending within the tip portion for axial movement between an extended and a retracted position, the pintle having an external head engageable with a valve seat of the spray aperture to close the spray aperture when the pintle is in its retracted position, a return spring biasing the pintle towards its retracted position, an actuating means in the form of a piezo-stack, acting upon the pintle to urge the pintle to its extended position when the piezo-stack is energized.

The piezo-stack can provide a high opening force to overcome the strong return spring required to hold the valve closed and the high hydraulic forces generated during the high pressure operation of the injector. The piezo-stack also provides rapid valve opening and can achieve a variable valve lift. However, piezo-electric fuel injectors are very costly to produce compared to solenoid actuated injectors and require complex and costly control systems for operation of the piezo-stack.

By contrast, solenoid actuated fuel injectors as disclosed in EP1783356 are much cheaper to produce. However, known solenoid actuated fuel injectors cannot provide the same level of performance as piezo-electric actuated devices, mainly due to the lower opening force achievable by electromagnetic solenoid actuators and the slower rise of force over time.

A particular problem with known outwardly opening solenoid actuated fuel injectors when operated at high speed is valve bounce. When opening and closing the injector at high speed, the impact of the pintle against its stop (during opening) and the pintle head against the valve seat (during closing) can be substantial due to the large mass of the armature connected to the pintle and the force exerted on the pintle by the return spring. Due to the elasticity of the impact surfaces of the pintle and housing, such surfaces tend to rebound from one another, leading to uncontrolled pintle movements which can affect the accuracy of the fuel injection in terms of flow rates and timing. This problem is particularly acute in high pressure applications.

Known outwardly opening solenoid actuated fuel injectors utilise squeeze film damping to attempt to reduce valve bounce by carefully controlling the air gap between the armature and the facing surfaces above and below the armature when the pintle is in its retracted and extended positions. Such gaps are required to be controlled to around 20µm or less with slight variations leading to substantial variations in squeeze damping effect. Manufacturing and adjusting such air gaps has proven to be very expensive and difficult to control, with additional problems of durability and performance, particularly in relation to differential thermal expansion of different parts of the injector during use. Squeeze film damping forces are essentially proportional to the cube of the distance between squeeze damping surfaces and their relative velocity. Due to this highly non-linear nature, squeeze damping gaps need to be very well controlled in order to limit part by part variations in a mass produced injector. Any change in the acceleration of the pintle during opening and closing of the valve can adversely affect the controllability of the injection timing and flow rate. The fuel flow rate through the injector is substantially constant once the pintle is fully open. Thus it is desirable to minimise the time taken for the pintle to move between its fully open and fully closed positions.

An object of the present invention is to provide a solenoid actuated fuel injector that achieves the same performance as a piezo-electric actuated device.

### SUMMARY OF THE INVENTION

According to the present invention there is provided a fuel injector for an internal combustion engine, the injector comprising an injector body having a tip portion defining at least one spray aperture; a pintle extending within the tip portion, the pintle having a head portion engageable with a valve seat to close the spray aperture, the pintle being axially moveable between a closed position wherein the head portion engages the valve seat and an open position wherein the head portion is spaced from the valve seat; guide means being provided within the injector body guiding the pintle for axial movement between its closed and open positions, a stroke limiting stop being provided on the pintle, said stroke limiting stop being enageable with a stop surface of the guide means when the pintle is in its open or extended position to define the maximum pintle stroke; primary biasing means being provided for biasing the pintle towards its closed position; and solenoid means for selectively moving the pintle into said open position; said solenoid means comprising an electromagnetic coil and a moveable armature capable of being acted upon by the coil to urge the pintle towards its open position; wherein the armature is slidably mounted on the pintle whereby the armature can continue to move towards the coil after the stroke limiting stop engages the stop surface of the guide means as the pintle moves from its closed position to its open position.

Preferably a flange or stop means is provided on the pintle for limiting the movement of the armature with respect to the pintle in an opening direction of the pintle. Preferably second biasing means is provided for biasing the armature towards said flange or stop means. Preferably said second biasing means comprises a spring arranged to act between the pintle and the armature to urge the armature against said stop means. In one embodiment said spring comprises a disc spring. However, it is also envisaged that a coil spring may be utilised.

Preferably the fuel injector is an outwardly opening fuel injector.

Preferably the pintle comprises coaxial upper and lower parts, the lower part including said head portion and said stroke limiting stop and the upper part including the flange or stop means and upon which the armature is mounted, said lower and upper parts being in abutting relationship whereby the lower and upper parts can separate from one another when the pintle head portion engages the valve seat as the pintle moves from its open to its closed positions.

### BRIEF DESCRIPTION OF THE DRAWINGS

The present invention will now be described, by way of example, with reference to the accompanying drawings, in which:
- Fig 1A is a sectional view of a fuel injector comprising a solenoid actuator according to a preferred embodiment of the present invention when its pintle is in a closed position;
- Fig 1B is a detailed sectional view of the armature region of the fuel injector of Fig. 1A when the pintle is in the closed position;
- Fig 2A and 2B are similar views to fig 1A and 1B showing the injector when the upper part of the pintle is in an intermediate position before opening;
- Fig 3A and 3B are similar views to fig 1A and 1B showing the injector when the two parts of the pintle are in an open position before the armature of the actuator reaches its final axial position;
- Fig 4A and 4B are similar views to fig 1A and 1B showing the injector when the two parts of the pintle are in the open position and the armature has reached its final axial position against a pole piece.

### DESCRIPTION OF THE PREFERRED EMBODIMENTS

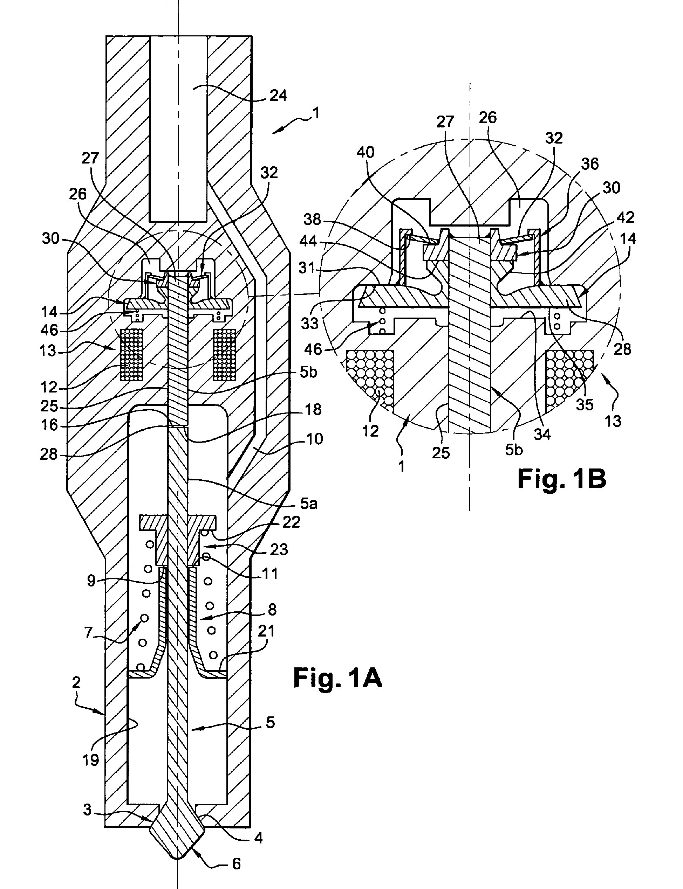

A fuel injector according to an embodiment of the present invention is shown in Fig 1. The fuel injector comprises an injector body 1, extending substantially along a vertical axis A1, having a tip portion 2 having a spray aperture 3 at a lower or distal end thereof. An outwardly opening valve pintle 5 extends within the tip portion 2, the pintle 5 having a head portion 6 engageable with a valve seat 4 surrounding the spray aperture 3 to close the spray aperture 3.

In the present description, a vertical orientation along the injector axis A 1 will be used as a non limitative example for a purpose of better understanding of the invention.

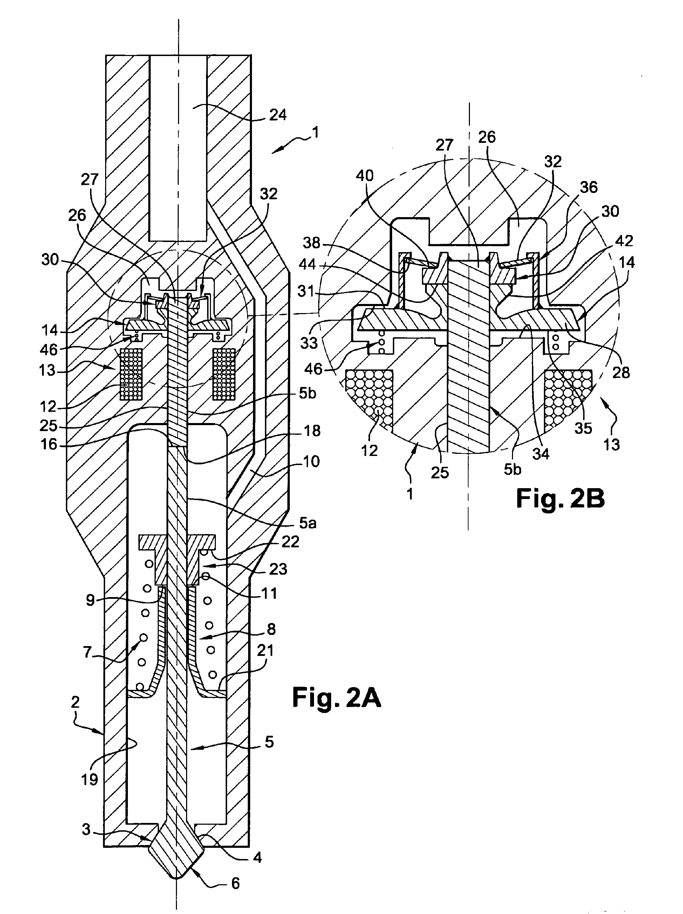

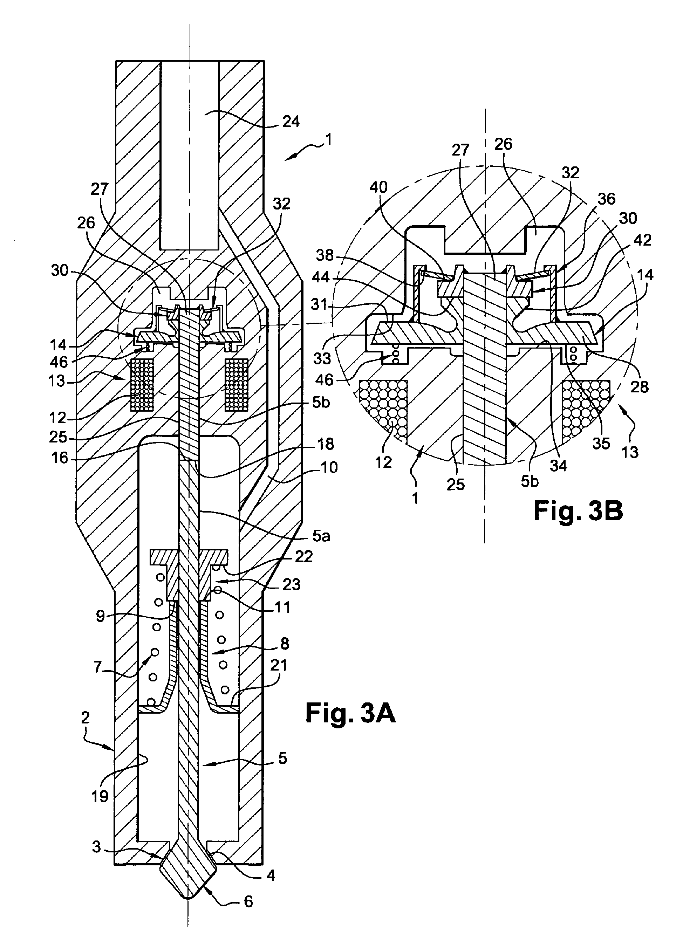

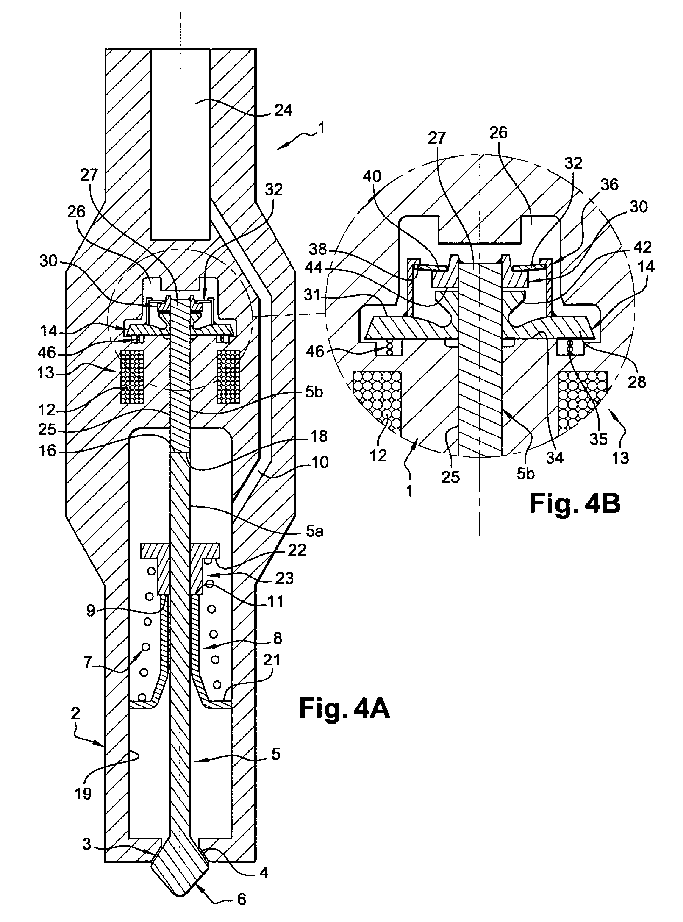

The pintle 5 is axially moveable along its axis A1 within the injector body 1 between a retracted or closed position shown on figures 1A, 2A, corresponding to the upper position of the pintle 5, wherein the head portion 6 engages the valve seat 4, and an extended or open position shown on figures 3A, 4A, corresponding to the lower position of the pintle 5, wherein the head portion 6 is spaced from the valve seat 4.

A solenoid actuator 13, comprising an electromagnetic coil 12 and a moveable armature 14 capable of being acted upon by the coil 12, is provided within the body 1 and is arranged to be operable to urge the pintle 5 to its open position.

The pintle 5 comprises separate coaxial lower and upper parts 5a,5b, the lower part 5a including the valve head portion 6, and the upper part 5b having the armature 14 of the solenoid actuator 13 mounted thereon.

Tubular guide means 8 are attached to the inner wall 19 of the tip portion 2 of the injector body 1 in order to provide axial guiding to the lower part 5a of the pintle 5.

A return spring 7, here an helical spring, is mounted within the tip portion 2 around the tubular guide means 8, and biases the lower part 5a of the pintle 5 towards its closed position. The lower end of the return spring 7 engages a first radial surface 21 provided on the guide means 8 and the upper end of the return spring 7 engages a second radial surface 22 provided on a collar 23 fixed on the lower part 5a of the pintle 5.

The radial surface at the lower end of the collar 23 defines a stroke limiting stop 9 which cooperates with a stop surface 11 provided at the upper end of the guide means 8 to limit the extension or stroke of the lower part 5a of the pintle 5 and to define the open position of the pintle 5.

The interior of the tip portion 2 communicates with an inlet port 24 of the body 1 by means of a fuel supply passageway 10 whereby high pressure fuel can be supplied to the interior of the body 1 upstream of the spray aperture 3.

The upper end 16 of the lower part 5a, remote from the head portion 6, is engageable by a lower end 18 of the upper part 5b, upon which the armature 14 is mounted, to urge the pintle 5 to its open position when the coil 12 is energized to open the injector. Said upper end 16 of the lower part 5a is separable from said lower end 18 of the upper part 5b, whereby the upper part 5b, and the armature 14 mounted thereon, can decouple from the lower part 5a when the pintle 5 moves from its extended to its retracted position during injector closing.

The injector body 1 comprises upper guiding means constituted of a through bore 25 for axially guiding the upper part 5b of the pintle 5. Above the through bore 25 is a chamber 26 wherein the upper end portion 27 of the upper part 5b extends and wherein the armature 14 extends. The upper end portion 27 of the upper part 5b and the armature 14 are able to move axially in this chamber 26 as it will be explained later on.

As shown in Fig 2, the armature 14 is axially slidably mounted on the upper end portion 27 of the upper part 5b and is urged against an upper or armature stop 30, attached to the upper part 5b, by means of a disc spring 32 acting between the armature 14 and the armature stop 30.

Alternatively, the armature stop 30 could be a flange made of one piece with the upper part 5b of the pintle 5.

According to the present embodiment, the armature 14 comprises an annular disc shape portion 29 defining an upper radial surface 31 which engages a facing shoulder 33 of the injector body 1 when the armature 14 is in its upper axial position, as shown on figure 1B, and defining a bottom surface 35 which engages a facing pole surface 34 of the solenoid 13 when the armature 14 is in its lower axial position and the coil 12 is energized, as shown on figure 4B.

The disc shape portion 29 extends upward along a coaxial annular stand 42 which is urged by the disc spring 32 against the annular bottom surface 44 of the armature stop 30. The annular stand 42 is integral with the disc shape portion 29.

The armature 14 also comprises holding means 36 for the disc spring 32 which are attached, for example by soldering, to the upper surface 31 of the disc shape portion 29. The holding means 36 are of tubular shape and are provided with an inner flange 37 at the upper extremity in order to define a support surface 38 orientated downward. The disc spring 32 is held between the support surface 38 and the opposite support surface 40 of the armature stop 30.

Alternatively, the disc spring 32 and the holding means 36 could be made of one piece.

The different axial positions which can be occupied by the different moving parts will be now explained with reference to figures 1A to 4A.The lower part 5a of the pintle 5 has an upper position or closed position, shown on figures 1A and 2A, wherein the valve head portion 6 engages the valve seat 4, and has a lower position or open position, shown on figures 3A and 4A, wherein the valve head portion 6 is spaced from the valve seat 4 to allow fuel injection to take place through the spray aperture 3. The open position of the lower part 5a of the pintle 5 is defined by the stop surface 11 against which the stroke limiting stop 9 engages.

The upper part 5b of the pintle 5 is slidably mounted in the through bore 25 of the injector body 1 between an upper or neutral position, shown on figure 1A, and a lower or open position, shown on figure 3A and 4A. In its neutral position, the lower end 18 of the upper part 5b does not engage the upper end 16 of the lower part 5a of the pintle 5 whereby an axial space 28 remains between the lower and upper parts 5a, 5b. In its open position, the lower end 18 of the upper part 5b engages the upper end 16 of the lower part 5a of the pintle 5 whereby the lower part 5a is urged in its open position against the resilient force of the return spring 7.

It has to be noted that the upper part 5b of the pintle 5 has an intermediate axial position, shown on figure 2A, wherein the upper part 5b is in contact with the lower part 5a but the lower part 5a has not moved yet and the spray aperture 3 is still closed.

The armature 14 is axially movable between an upper or deactivated position, shown on figures 1A and 1B, wherein its upper surface 31 engages the shoulder 33, and a lower or fully activated position, shown on figures 4A and 4B, wherein its bottom surface 35 engages the pole surface 34 upon energization of the solenoid 13. In its fully activated position, the annular stand 42 is shifted from the armature stop 30 of the upper part 5b of the pintle 5, against the resilient force of the disc spring 32, the disc spring 32 being compressed between the support surface 38 and the opposite support surface 40 of the armature stop 30.

Figures 2A, 2B, 3A, 3B show two intermediate positions of the armature 14 corresponding firstly to the intermediate position of the upper part 5b of the pintle 5 (figures 2A, 2B), and secondly to the open position of the upper part 5b (figures 3A, 3B), while the annular stand 42 is still in contact with the armature stop 30, just before the shifting.

Now it will be explained the way the injector works according to the present invention.

During valve opening, the coil 12 is energized and the armature 14 is accelerated towards the coil 12. Such movement of the armature 14 is transmitted to the valve head portion 6 via the upper and lower parts 5b, 5a to urge the valve head portion 6 to an open position, spaced from the valve seat 4. The impact of the stroke limiting stop 9 on the stop surface 11 limits the stroke of the pintle 5 to define the maximum flow rate of the injector.

Once the stroke limiting stop 9 engages the stop surface 11, the armature 14 moves away from the armature stop 30 against the resilience of the disc spring 32 until the armature 14 impacts the pole piece 34 of the valve housing. The decoupling of the armature 14 from the pintle 5 thus isolates the pintle 5 from any uncontrolled movement of the armature 14 due to bounce upon impact of the armature 14 with the pole piece 34. The free play of the armature 14 on the upper part 5b enables the armature 14 to be self aligning upon impact with the pole piece 34.

Furthermore, the decoupling of the armature 14 from the pintle 5 avoids the otherwise adverse affect of differential thermal expansion between the pintle 5 and body 1 which can otherwise cause uncontrolled variation in the gap between the armature 14 and the pole piece 34 when the pintle 5 is in its open position such as can occur where the armature 14 is welded or otherwise fixed to the pintle 5, causing variation in squeeze damping effects.

The ability of the armature 14 to slide along the pintle 5 after the pintle 5 has reached its fully open position also provides benefits in terms of the subsequent speed of closing of the injector. The spring force of the disc spring 32 can be greater than that of the primary pintle return spring 7. Thus, when the coil 12 is initially de-energized to close the injector, the disc spring 32 acts upon the armature 14 to rapidly accelerate the armature 14 towards the armature stop 30. Thus the armature 14 gains inertia before it impacts the armature stop 30 and the pintle 5 begins to close. The primary return spring 7 needs to initially accelerate only the pintle 5 and not the combined mass of the pintle 5 and armature 14, leading to faster and more consistent injector closing times.

Valve bounce upon injector opening is avoided by decoupling the armature 14 from the pintle 5 such that the armature 14 slides along the upper part 5b, against the disc spring 32, and continues to move towards the pole piece 34, when the stroke limiting stop 9 abuts the stop surface 11 as the injector opens.

Valve bounce upon injector closing is avoided by decoupling the armature 14 from the pintle 5 such that the upper part 5b of the pintle and the armature 14 separate from the lower part 5a of the pintle 5 and continue moving towards the shoulder 33 when the head portion 6 abuts the valve seat 4 as the injector closes (i.e. as the pintle 5 moves to its retracted position).

Thus the inertia of the armature 14 upon injector closing and opening has no effect on the head portion 6 and the impact force of the head portion 6 on the valve seat 4 is reduced.

Advantageously, an armature return spring 46 is provided between the armature 14 and the coil 12 to urge the armature 14 towards the shoulder 33 to maintain a zero upper gap when the coil 12 is de-energized.

By providing the gap 28 between the upper and lower parts 5a, 5b when the coil 12 is de-energized and the injector is closed, the initial force required to be exerted by the coil 12 to move the head portion 6 away from the valve seat 4 to open the injector is reduced because the armature 14 is able to pick up speed as it closes such gap 28 without also needing to move the lower part 5a, the gained momentum of the armature 14 then assisting in the initial movement of pintle head portion 6 as the armature 14 and upper part 5b impacts the lower part 5b.

Various modifications and variations to the described embodiments of the inventions will be apparent to those skilled in the art without departing from the scope of the invention as defined in the appended claims. Although the invention has been described in connection with specific preferred embodiments, it should be understood that the invention as claimed should not be unduly limited to such specific embodiments.

## Claims

1. A fuel injector for an internal combustion engine, the injector comprising an injector body (1) having a tip portion (2) defining at least one spray aperture (3); a pintle (5) extending within the tip portion (2), the pintle (5) having a head portion (6) engageable with a valve seat (4) to close the spray aperture (3), the pintle (5) being axially moveable between a closed position wherein the head portion (6) engages the valve seat (4) and an open position wherein the head portion (6) is spaced from the valve seat (4); guide means (8) being provided within the injector body (1) guiding the pintle (5) for axial movement between its closed and open positions, a stroke limiting stop (9) being provided on the pintle (5), said stroke limiting stop (9) being engageable with a stop surface (11) when the pintle (5) is in its open position to define the maximum pintle stroke; primary biasing means (7) being provided for biasing the pintle (5) towards its closed position; and solenoid means (13) for selectively moving the pintle (5) into said open position; said solenoid means (13) comprising an electromagnetic coil (12) and a moveable armature (14) capable of being acted upon by the coil (12) to urge the pintle (5) towards its open position,
**characterized in that** the armature (14) is slidably mounted on the pintle (5) whereby the armature (14) can continue to move towards the open position of the pintle (15) after the stroke limiting stop (9) engages the stop surface (11) as the pintle (5) moves from its closed position to its open position.

2. A fuel injector as claimed in claim 1, wherein a flange or armature stop (30) is provided on the pintle (5) for limiting the movement of the armature (14) with respect to the pintle (5) in an opening direction of the pintle (5).

3. A fuel injector as claimed in claim 2, wherein second biasing means (32) is provided for biasing the armature (14) towards said flange or armature stop (30).

4. A fuel injector as claimed in claim 3, wherein the armature (14) includes a support surface (38) facing an opposite support surface (40) located on the armature stop (30), said second biasing means (32) being compressed between said support surfaces (38, 40).

5. A fuel injector as claimed in claim 3 or 4, wherein said second biasing means (32) is a disc spring.

6. A fuel injector as claimed in any preceding claims, wherein the fuel injector is an outwardly opening fuel injector.

7. A fuel injector as claimed in any preceding claim, wherein the pintle (5) comprises coaxial upper and lower parts (5a, 5b), the lower part (5a) including said head portion (6) and said stroke limiting stop (9) and the upper part (5b) including the flange or armature stop (30) and upon which the armature (14) is mounted, said lower and upper parts (5a, 5b) being engageable whereby the lower and upper parts (5a, 5b) can separate from one another when the pintle head portion (6) engages the valve seat (4) as the pintle (5) moves from its open to its closed positions.

8. A fuel injector as claimed in any preceding claim, wherein the stop surface (11) is arranged on the guide means (8).

9. A fuel injector as claimed in any preceding claim, wherein the stroke limiting stop (9) is arranged on a collar (23) provided on the pintle (5) for holding the primary biasing means (7), said stroke limiting stop (9) engaging a stop surface (11) arranged on the guide means (8).

## Patentansprüche

1. Kraftstoffinjektor für einen Verbrennungsmotor, wobei der Injektor aufweist einen Injektorkörper (1) mit einem Spitzenbereich (2), der zumindest eine Sprayöffnung (3) definiert; einen Zapfen (5), der sich in dem Spitzenbereich (2) erstreckt, wobei der Zapfen (5) einen Kopfteil (6) hat, der einen Ventilsitz (4) kontaktieren kann, um die Sprayöffnung (3) zu schließen, wobei der Zapfen (5) axial bewegbar ist zwischen einer geschlossenen Position, in der der Kopfteil (6) den Ventilsitz (4) kontaktiert, und einer offenen Position, in der der Kopfteil (6) von dem Ventilsitz (4) beabstandet ist; ein Führungsmittel (8), das in dem Injektorkörper (1) vorgesehen ist, zum Führen des Zapfens (5) für eine axiale Bewegung zwischen seinen geschlossenen und offenen Positionen, ein Hubbegrenzungsanschlag (9), der an dem Zapfen (5) vorgesehen ist, wobei der Hubbegrenzungsanschlag (9) eine Anschlagsfläche (11) kontaktieren kann, wenn der Zapfen (5) in seiner offenen Position ist, um den maximalen Hub des Zapfens zu definieren; ein primäres Biasing-Mittel (7), das vorgesehen ist zum Beeinflussen des Zapfens (5) in seine geschlossene Position; und ein Solenoid-Mittel (13) zum selektiven Bewegen des Zapfens (5) in die offene Position; wobei das Solenoid-Mittel (13) eine elektromagnetische Spule (12) und einen beweglichen Anker (14) aufweist, auf den die Spule (12) wirken kann, um den Zapfen (5) in seine offene Position zu bringen,
**dadurch gekennzeichnet, dass** der Anker (14) an dem Zapfen (5) verschiebbar angebracht ist, wodurch sich der Anker (14) weiter zu der offenen Position des Zapfens (15) hin bewegen kann, nachdem der Hubbegrenzungsanschlag (9) die Anschlagsfläche (11) kontaktiert, wenn sich der Zapfen (5) von seiner geschlossenen Position in seine geöffnete Position bewegt.

2. Kraftstoffinjektor gemäß Anspruch 1, wobei ein Flansch oder Ankeranschlag (30) an dem Zapfen (5) vorgesehen ist zum Begrenzen der Bewegung des Ankers (14) hinsichtlich des Zapfens (5) in einer Öffnungsrichtung des Zapfens (5).

3. Kraftstoffinjektor gemäß Anspruch 2, wobei ein zweites Biasing-Mittel (32) vorgesehen ist zum Beeinflussen des Ankers (14) hin zu dem Flansch oder dem Ankeranschlag (30).

4. Kraftstoffinjektor gemäß Anspruch 3, wobei der Anker (14) eine Auflagefläche (38) umfasst, die einer gegenüberliegenden Auflagefläche (40) zugewandt ist, die sich auf dem Ankeranschlag (30) befindet, wobei das zweite Biasing-Mittel (32) zwischen den Auflageflächen (38, 40) komprimiert ist.

5. Kraftstoffinjektor gemäß Anspruch 3 oder 4, wobei das zweite Biasing-Mittel (32) eine Tellerfeder ist.

6. Kraftstoffinjektor gemäß einem der vorhergehenden Ansprüche, wobei der Kraftstoffinjektor ein nach außen öffnender Kraftstoffinjektor ist.

7. Kraftstoffinjektor gemäß einem der vorhergehenden Ansprüche, wobei der Zapfen (5) koaxiale obere und untere Teile (5a, 5b) aufweist, wobei der untere Teil (5a) den Kopfteil (6) und den Hubbegrenzungsanschlag (9) umfasst und der obere Teil (5b) den Flansch oder Ankeranschlag (30) umfasst und auf dem der Anker (14) angebracht ist, wobei die unteren und oberen Teile (5a, 5b) einander kontaktieren können, wodurch sich die unteren und oberen Teile (5a, 5b) voneinander trennen können, wenn der Kopfteil (6) des Zapfens den Ventilsitz (4) kontaktiert, wenn sich der Zapfen (5) von seiner offenen in seine geschlossene Position bewegt.

8. Kraftstoffinjektor gemäß einem der vorhergehenden Ansprüche, wobei die Anschlagsfläche (11) an dem Führungsmittel (8) angeordnet ist.

9. Kraftstoffinjektor gemäß einem der vorhergehenden Ansprüche, wobei der Hubbegrenzungsanschlag (9) an einem Kragen (23) angeordnet ist, der an dem Zapfen (5) vorgesehen ist zum Halten des primären Biasing-Mittels (7), wobei der Hubbegrenzungsanschlag (9) eine Anschlagsfläche (11) kontaktiert, die auf dem Führungsmittel (8) angeordnet ist.

## Revendications

1. Injecteur de carburant pour un moteur à combustion interne, l'injecteur comprenant un corps d'injecteur (1) ayant une portion d'embout (2) définissant au moins une ouverture de pulvérisation (3) ; une aiguille (5) s'étendant dans la portion d'embout (2), l'aiguille (5) ayant une portion formant tête (6) capable d'engager un siège de valve (4) pour fermer l'ouverture de pulvérisation (3), l'aiguille (5) étant axialement mobile entre une position fermée dans laquelle la portion formant tête (6) engage le siège de valve (4) et une position ouverte dans laquelle la portion formant tête (6) est espacée du siège de valve (4); des moyens de guidage (8) prévus dans le corps d'injecteur (1) et guidant l'aiguille (5) pour un mouvement axial entre sa position fermée et sa position ouverte, un arrêt de limitation de course (9) étant prévu sur l'aiguille (5), ledit arrêt de limitation de course (9) étant capable d'engager une surface d'arrêt (11) quand l'aiguille (5) est dans sa position ouverte pour définir une course maximum de l'aiguille ; des moyens de sollicitation primaires (7) étant prévus pour solliciter l'aiguille (5) vers sa position fermée ; et des moyens à solénoïde (13) pour déplacer sélectivement l'aiguille (5) jusque dans ladite position ouverte ; lesdits moyens à solénoïde (13) comprenant une bobine électromagnétique (12) et une armature mobile (14) capable de recevoir une action de la part de la bobine (12) pour forcer l'aiguille (5) vers sa position ouverte,
**caractérisé en ce que** l'armature (14) est montée en coulissement sur l'aiguille (5) grâce à quoi l'armature (14) peut continuer à se déplacer vers la position ouverte de l'aiguille (15) après que l'arrêt de limitation de course (9) ait engagé la surface d'arrêt (11) alors que l'aiguille (5) se déplace de sa position fermée à sa position ouverte.

2. Injecteur de carburant selon la revendication 1, dans lequel une bride ou arrêt d'armature (30) est prévue sur l'aiguille (5) pour limiter le mouvement de l'armature (14) par rapport à l'aiguille (5) dans une direction d'ouverture de l'aiguille (5).

3. Injecteur de carburant selon la revendication 2, dans lequel des seconds moyens de sollicitation (32) sont prévus pour solliciter l'armature (14) vers ladite bride ou arrêt d'armature (30).

4. Injecteur de carburant selon la revendication 3, dans lequel l'armature (14) inclut une surface de support (38) en face d'une surface de support opposée (40) située sur l'arrêt d'armature (30), lesdits seconds moyens de sollicitation (32) étant comprimés entre lesdits surfaces de support (38, 40).

5. Injecteur de carburant selon la revendication 3 ou 4, dans lequel lesdits seconds moyens de sollicitation (32) sont formés par un ressort en disque.

6. Injecteur de carburant selon l'une quelconque des revendications précédentes, dans lequel l'injecteur de carburant est un injecteur de carburant ouvert vers l'extérieur.

7. Injecteur de carburant selon l'une quelconque des revendications précédentes, dans lequel l'aiguille (5) comprend des parties supérieure et inférieure (5a, 5b) coaxiales, la partie inférieure (5a) incluant ladite portion formant tête (6) et ledit arrêt de limitation de course (9), et la partie supérieure (5b) incluant la bride ou arrêt d'armature (30) et sur laquelle/lequel l'armature (14) est montée, lesdites parties inférieure et supérieure (5a, 5b) pouvant être engagées suite à quoi les parties inférieure et supérieure (5a, 5b) peuvent se séparer l'une de l'autre quand la portion (6) formant tête d'aiguille engage le siège de valve (4) alors que l'aiguille (5) se déplace de sa position ouverte à sa position fermée.

8. Injecteur de carburant selon l'une quelconque des revendications précédentes, dans lequel la surface d'arrêt (11) est agencée sur le moyen de guidage (8).

9. Injecteur de carburant selon l'une quelconque des revendications précédentes, dans lequel l'arrêt de limitation de course (9) est agencé sur un collier (23) prévu sur l'aiguille (5) pour tenir les premiers moyens de sollicitation primaires (7), ledit arrêt de limitation de course (9) engageant une surface d'arrêt (11) agencée sur le moyen de guidage (8).
